# EUROPÄISCHE PATENTSCHRIFT

(11) **EP 1 865 755 B1**
(45) Veröffentlichungstag und Bekanntmachung des Hinweises auf die Patenterteilung: **23.04.2014**
(21) Anmeldenummer: 07011413.7
(22) Anmeldetag: 11.06.2007
(51) Int. Cl.: H05B 37/02, G08B 13/196, G06T 7/20

(54) **Vorrichtung zur Beleuchtungssteuerung mit Anwesenheits-Erfassung**
Device to control illumination having presence detection
Dispositif destiné à la commande d'un éclairage avec détection de présence

(30) Priorität: 09.06.2006 DE 202006009229 U; 27.09.2006 DE 202006014979 U
(43) Veröffentlichungstag der Anmeldung: 12.12.2007
(73) Patentinhaber: Steinel GmbH, 33442 Herzebrock (DE)
(72) Erfinder: Fieseler, Martin, Dr., 45134 Essen (DE)
(74) Vertreter: Behrmann, Niels

(56) Entgegenhaltungen:
- DE-A1- 10 210 470
- GB-A- 2 400 911
- US-A1- 2004 146 203

## Beschreibung

Die vorliegende Erfindung betrifft eine Vorrichtung zur Beleuchtungssteuerung nach dem Oberbegriff des Hauptanspruchs sowie eine Anwesenheits-Erfassungsvorrichtung, die bevorzugt zum Einsatz in einer solchen Vorrichtung zur Beleuchtungssteuerung ausgebildet ist.

Gattungsgemäße Vorrichtungen zur Beleuchtungssteuerung sind aus dem Stand der Technik allgemein bekannt; so werden für den Innen- sowie Außenbereich in großer Stückzahl bewegungssensorgesteuerte Leuchten in den Verkehr gebracht, welche, neben entsprechend dem Einsatz- und Beleuchtungszweck eingerichteten Leuchtmitteln, bekannte Sensortechnologien zur Erfassung von Bewegung eines Erfassungsobjekts (typischerweise einer zu detektierenden Person) in einem Erfassungsbereich vor dem jeweiligen Sensor nutzen. Eine gängige, derartige Technologie ist die Verwendung sog. PIR-(Passiv-Infrarot-) Sensoren, nämlich Sensorvorrichtungen zur Erfassung von Wärmestrahlung von sich im Erfassungsbereich bewegenden Personen, wobei das mittels einer Infrarotoptik auf ein solches PIR-Sensorelement abgebildete Objektbild ein elektrisches Signal erzeugt und in seinem Änderungsverhalten zur Bewegungsdetektion ausgewertet wird.

Während eine solche infrarotbasierte Technologie technologisch ausgereift und insbesondere auch in der Großserie gut beherrscht wird, ist eine solche Sensorik -- prinzipbedingt -- im Einsatz nicht unkritisch. So basiert das Erfassungsprinzip, wie oben beschrieben, auf dem Auswerten abgebildeter Temperaturschwankungen; dies führt dazu, dass typischerweise Personen, die sich in einer Bewegungsrichtung auf einen PIR-Sensor zu bewegen, wesentlich schlechter erfasst werden (also der Sensor unempfindlicher ist), als würde dieselbe Person in einer Tangentialrichtung zu dieser Richtung sich bewegen. Zudem verfälschen andere, unerwünschte Wärmequellen häufig das Erfassungsergebnis, etwa (vor allem im Außenbereich relevant) Luftströmungen, Bewegungen von Bäumen od.dgl. oder Wolkenbewegungen am Himmel. Hinzu kommt der Umstand, dass kleine Erfassungsobjekte relativ nah zum Sensor (also z.B. als Detektorobjekt unerwünschte Hunde od.dgl. Tiere) in derselben Weise ein Sensordetektionssignal auslösen, wie ein Mensch in relativ größerer Entfernung.

Im Stand der Technik werden daher schon seit längerem alternative Detektionsverfahren zur Bewegungserfassung erprobt und auch in Produkten realisiert, die anstelle der Infrarotstrahlung Mikrowellen oder Ultraschallsignale zur Bewegungsdetektion auswerten. Auch hier gibt es jedoch wiederum jeweils systembedingte Probleme. So ist vor allem bei Radarsensoren in gängigen Mikrowellen-Frequenzbereichen ein Erfassungsbereich oft schlecht abgrenzbar, insbesondere als Mikrowellen auch (unerwünscht) Wände oder Türen unter gewissen Umständen durchdringen, wiederum mit dem unerwünschten Effekt von Fehlschaltungen. Dagegen sind Ultraschallsensoren aus anderen Gründen störungsempfindlich, reagieren wiederum nur auf gewisse Bewegungsmuster und besitzen häufig nur eine begrenzte maximale Erfassungsentfernung.

Aus der DE 102 10 470 A1 ist eine Vorrichtung zur Beleuchtungssteuerung mit einer als Reaktion auf eine durch Sensormittel detektierte Bewegung eines Detektionsobjekts in einem Erfassungsbereich aktivierte Beleuchtungseinheit bekannt, wobei die Sensormittel Mittel zur digital-elektronischen Bilderfassung des Erfassungsbereichs aufweisen, denen elektronische Auswertemittel so zugeordnet sind, dass ein Detektionssignal zur Aktivierung der Beleuchtungseinheit dann erzeugt wird, wenn ein erstes elektronisches Bildsignal eines ersten erfassten digitalen Bildes zumindest in einem Bild-Teilbereich verschieden von einem zweiten elektronischen Bildsignal am zweiten, zeitlich beabstandet erfassten digitalen Bildes bezogen auf zumindest dem Bild-Teilbereich ist.

Zum weiteren einschlägigen Stand der Technik wird verwiesen auf die GB 2 400 977 A, die US 2004/146203 A1 sowie die Veröffentlichung "The Scientist und Engineer's Guide to Digital Signal Processing", Seiten 407-410, S.W. Smith, 1999, wobei in letzterer Druckschrift insbesondere auch Technologien zum Bestimmen von Helligkeitsnormwerten offenbart sind.

Damit besteht insbesondere vor dem Hintergrund der (klassischen) Beleuchtungssteuerung im Innen- und Außenbereich das Bedürfnis nach einer verbesserten, insbesondere im Hinblick auf Zuverlässigkeit und Sicherheit der Detektion gegen Fehlschaltungen, Erfassungssensorik für ein zu detektierendes Objekt, insbesondere eine Person, im gewünschten Erfassungsbereich. Entsprechend ist es Aufgabe der vorliegenden Erfindung, eine gattungsgemäße Vorrichtung zur Beleuchtungssteuerung im Hinblick auf Zuverlässigkeit, Präzision und Abgrenzbarkeit der Detektion zu verbessern. Auch soll im Rahmen dieser Aufgabenstellung eine verbesserte Sensorik geschaffen werden, welche sich für weitergehende, ggf. über die Beleuchtungssteuerung hinausgehende Steuerungs- bzw. Aktivierungsaufgaben eignet.

Die Aufgabe wird durch die Vorrichtung mit den Merkmalen des Hauptanspruchs sowie des unabhängigen Anspruchs 11 gelöst; vorteilhafte Weiterbildungen der Erfindung sind in den Unteransprüchen beschrieben.

In erfindungsgemäß vorteilhafter Weise sind dabei im Rahmen der erfindungsgemäßen Sensormittel Mittel zur digitalen elektronischen Bilderfassung vorgesehen, welche digitale elektronische Bildsignale entsprechend erfassten digitalen Bildern erzeugen und einer nachfolgenden Auswertung zuführen können, wobei das Auswerteprinzip auf einem Bildvergleich zeitlich aufeinanderfolgender elektronischer Bilder und der darin enthaltenen Bildinformationen beruht und das gewünschte Detektionssignal insbesondere dann erzeugt wird, wenn zumindest in einem Teilbereich des ersten bzw. zweiten digitalen Bildes eine hinreichend signifikante, dem zu erfassenden Detektionsobjekt entsprechende Änderung festgestellt wird.

Hervorzuheben ist in diesem Zusammenhang, dass damit das klassische Vorgehen einer Bewegungserfassung überschritten wird und im eigentlichen Sinne eine Erfassung auf *Anwesenheit* des Erfassungsobjekts im Erfassungsbereich stattfindet: Im Rahmen der vorliegenden Erfindung kommt es nämlich zunächst nicht darauf an, dass sich das Erfassungsobjekt durch den Erfassungsbereich hindurch bewegt (auch insoweit müssen die zu vergleichenden elektronischen Bilder auch nicht etwa entsprechend zeitnah einander beabstandet sein), vielmehr ist es zur Realisierung der vorliegenden Erfindung ausreichend, wenn ermöglicht wird, dass eine elektronische Bildinformation zu einem späteren Zeitpunkt erkennen lässt (etwa dadurch, dass eine Person als Detektionsobjekt im Rahmen des zweiten elektronischen Bildes "fotografiert" wird), dass die zugehörige Bildinformation von der im ersten elektronischen Bild enthaltenden Bildinformation eines leeren Erfassungsbereichs abweicht und so das Detektionssignal ausgelöst werden kann.

Dieser prinzipielle Unterschied ist auch insoweit bedeutsam, als etwa bei traditionellen, eingangs beschriebenen Detektionsverfahren (und dies gilt sowohl für die PIR-Technologie, als auch für radarbasierte Sensoren) die nutzbare Signalstärke von der Bewegung bzw. Bewegungsgeschwindigkeit eines Objektes abhängig ist, was insbesondere dazu führt, dass ein sich extrem langsam bewegendes Objekt bei traditioneller gattungsbildender Sensortechnologie die beabsichtigte Erfassung unterläuft. Dagegen ist es im Rahmen der vorliegenden Erfindung eine Frage der Gestaltung eines der beiden elektronischen Bilder (z.B. des ersten Bildes) als Referenzbild, wie und auf welche Weise die Detektion erfolgt. Mit anderen Worten, es steht zu erwarten, dass durch die vorliegende Erfindung die Betriebs-, Erfassungs- und Steuersicherheit gegenüber traditionellen, gattungsbildenden Technologien deutlich erhöht werden kann.

In der praktischen Realisierung der Erfindung bietet es sich an, die erfindungsgemäßen Sensormittel geeignet mit einem CCD-Bildaufnahmesensor zu realisieren; nicht nur ist diese Technologie etabliert, preisgünstig auch für Großserienanwendungen realisierbar, auch existiert Schaltungsperipherie für einen solchen Sensor (etwa in Form zugehöriger Bildspeicher od.dgl.), mit welchem sich dann die vorliegende Erfindung mit geringem Aufwand umsetzen lassen kann.

Da es für die vorliegende Erfindung nicht notwendigerweise erforderlich ist, sämtliche erfassten Bilddetails bzw. Einzeldaten, welche mittels eines CCD-Sensors erfassbar sind, auszuwerten, ist es gemäß einer bevorzugten Weiterbildung der Erfindung günstig, sich auf einen einfach dem Bildsignal zu entnehmenden Parameter zu konzentrieren-- etwa die Helligkeitsinformation für einen jeweiligen Pixel oder eine Pixelgruppe -- und dann diese Information zur Anwesenheitserfassung auszuwerten (und weitere elektronische Bilddaten, etwa die Farbinformation, können dann unberücksichtigt bleiben; alternativ ist es auch im Rahmen der Erfindung möglich und vorgesehen, diese Daten zusätzlich oder anstelle von Helligkeitsinformationen zu verwenden).

Insbesondere dann, wenn weiterbildungsgemäß das elektronische Detektionssignal auf der Basis eines Unterschieds der Bildhelligkeiten zwischen den vergleichenden Bildern im relevanten Teilbild erzeugt wird, ist üblicherweise eine Kompensation der (selbst ja auch Schwankungen unterliegenden) Umgebungshelligkeit notwendig, etwa im Hinblick auf Sonnenschein oder Dämmerung im Außenbereich, oder das von einer angesteuerten Beleuchtungseinheit erzeugte Eigenlicht. Entsprechend sieht eine Weiterbildung der Erfindung vor, die Bildhelligkeit (geeignet über das gesamte aufgenommene Bild) zu erfassen, um damit einen Normierungs- bzw. Normwert zu erzeugen, welcher dann der Bilderfassung zugrunde gelegt wird, wobei die tatsächlich erfassten Bilder dann entsprechend um den Normwert bzw. mit diesem Normwert berichtigt (korrigiert) werden.

Erfindungsgemäß vorgesehen ist es zudem, als Referenzbild eines der zu vergleichenden digitalen Bilder (z.B. das erste elektronische Bild) so zu erfassen und dann für den Vergleich mit dem zweiten Bild zu speichern, dass das erste Bild einen Erfassungsbereich frei vom Detektionsobjekt aufweist. Dies ist im praktischen Betrieb nicht notwendigerweise trivial, denn, bei typischer Betriebsposition der erfindungsgemäßen Vorrichtung an einer Wand oder Decke, würde eine eine solche Einstellung vornehmende Bedienperson fast zwangsläufig auch von den Sensormitteln erfasst werden, so dass ein wirklich unbeeinträchtigtes Bild schwer zu erzeugen ist. Dementsprechend ist gemäß einer Weiterbildung der vorliegenden Erfindung eine ferngesteuerte Erzeugung und Speicherung des ersten Bildsignals vorgesehen, idealerweise mittels einer drahtlosen (z.B. mittels Funksignalen arbeitenden) Fernsteuereinheit, welche von der einstellenden Bedienperson aus einer Position außerhalb des Erfassungsbereichs betätigt werden kann, so dass insoweit einfach und elegant das erste elektronische Bild als Referenzbild (mit dem zugehörigen Bildsignal) erzeugt werden kann.

Insbesondere im Zusammenhang mit (selbst üblicherweise infrarotempfindlichen) CCD-Sensoren zur Realisierung der Mittel zur digitalen elektronischen Bilderfassung ist es zudem weiterbildungsgemäß vorgesehen, der Vorrichtung eine Lichtquelle zuzuordnen, welche in den Erfassungsbereich hinein strahlt, so dass bei dunklen Umgebungslichtverhältnissen (damit wären keine sinnvoll auswertbaren Bildaufnahmen möglich) gleichwohl eine Beleuchtung einer Person im Erfassungsbereich stattfinden kann, mit der Wirkung, dass die Reflexion an diesem Erfassungsobjekt dann ein zur Detektion ausreichendes Bildsignal ermöglicht. Infrarot-Strahlungsquellen, insbesondere eine Infrarot-LED, bieten den zusätzlichen Vorteil, dass diese für das menschliche Auge unsichtbar sind, insoweit auch nicht störend bzw. irritierend wirken und i.ü. nur minimale zusätzliche elektrische Leistung benötigen.

Durch den Umstand, dass gemäß der vorliegenden Erfindung, etwa realisiert mittels einer CCD-Bildaufnahmevorrichtung, Mittel zur Erfassung eines recht genauen, detaillierten und in Bild-Teilbereiche aufteilbaren Bildes existieren, ist weiterbildungsgemäß vorgesehen, zusätzlich Mittel zur Bildmustererkennung einzusetzen, um das erfasste Detektionsobjekt ggf. näher klassifizieren oder analysieren zu können. Insbesondere angesichts des eingangs beschriebenen Problems einer Abgrenzung von (zu detektierenden) Personen gegenüber (unerwünscht erfassten und nicht zu detektierenden) Kleintieren könnte daher eine solche Bildmustererkennung, die mittels ansonsten bekannter Algorithmen im Bildvergleich das erfasste Objekt charakterisiert (und insoweit etwa eine Erfassungsschwelle, bezogen auf eine Objektgröße, ermöglicht) und im Hinblich auf eine Lösung dieses Problems eingesetzt werden.

Während die vorliegende Erfindung vor allem im Zusammenhang mit der Beleuchtungssteuerung - im Innen- und Außenbereich - Vorteile bietet und existierende Probleme elegant überwindet, ist gleichwohl die Erfindung nicht auf die Beleuchtungssteuerung beschränkt. Vielmehr eignet sich die gemäß der Erfindung vorgesehene Anwesenheits-Erfassungsvorrichtung auch für weitere Erfassungsaufgaben von zu erfassenden Objekten, insbesondere Personen, bei denen traditionelle, primär bewegungsbasiert wirkende Sensorvorrichtungen Mängel aufweisen. So ist eine solche Vorrichtung etwa im Bereich der Aktivierung von Türen od.dgl. denkbar, ebenso wie im Kraftfahrzeugbereich (z.B. bei der Detektion von auf einem Fahrzeugsitz befindlichen Personen) od.dgl..

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: ein Blockschaltbild zum Verdeutlichen der wesentlichen Funktionskomponenten der Vorrichtung zur Beleuchtungssteuerung gemäß einer ersten, bevorzugten Ausführungsform der vorliegenden Erfindung und
- Fig. 2:: ein Detail-Blockschaltbild zum Verdeutlichen der Funktionskomponenten des digitalen Signalprozessors gemäß Fig. 1 sowie zum Verdeutlichen der Interaktion der Funktionskomponenten untereinander.

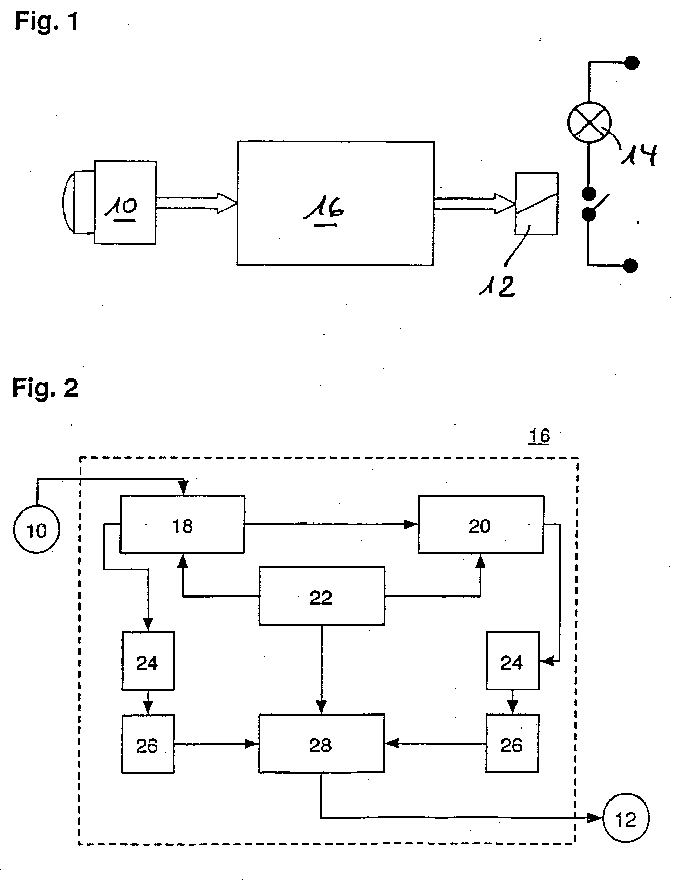

Ausgestaltet als anwesenheitsgesteuerte Sensorleuchte für den Büro- und/oder Objektbereich weist die in Figur 1 schematisch dargestellte Vorrichtung in Form einer Deckenleuchte eine CCD-Kameraeinheit 10 auf, welche in einem (nicht gezeigten) zur Deckenmontage vorgesehenen Gehäuse befestigt und auf einen hinsichtlich Anwesenheit (auch Bewegung) zu überwachenden Abschnitt des Raums gerichtet ist. Ausgangseitig weist die Sensorleuchtenvorrichtung schematisch dargestellte Schaltmittel 12 auf, welche zum Aktivieren oder Deaktivieren eines wiederum schematisch gezeigten Leuchtmittels 14 eingerichtet und beschaltet sind; bei der beispielsgemäßen Ausgestaltung als Deckenleuchte sind sämtliche in Figur 1 gezeigten Aggregate, eingeschlossen eine zwischen den Einheiten 10 und 12 zwischengeschaltete digitale Signalprozessorelektronik 16 (sowie weitere, nicht gezeigte Einheiten zur Stromversorgung oder dgl.) in einem geeigneten Deckenleuchtengehäuse vorgesehen, welches einen Sockel zur Aufnahme des Leuchtmittels 14, ebenso wie eine geeignete Optik für die Kameraeinheit 10 anbietet.

Die Figur 2 verdeutlicht, innerhalb der gestrichelten Umrandung, den Aufbau der Signalprozessorelektronik 16 durch einzelne Funktionskomponenten. Während es im Rahmen der Erfindung liegt, diese Funktionskomponenten diskret und durch Einzelschaltung bzw. -Einheiten zu realisieren, ist es insbesondere auch von der vorliegenden Erfindung umfasst, die nachfolgend zu beschreibenden Funktionseinheiten mittels einer gemeinsamen, generischen Elektronikeinheit (z.B. eine Mikrocontrollereinheit oder einem Einplatinen-Computer) zu realisieren, wobei dann die jeweiligen Funktionalitäten insbesondere auch softwaremäßig durch geeignete Programmierung einer zentralen Prozessoreinheit realisiert sein können.

Genauer gesagt ist der Kameraeinheit 10 eine erste Videospeichereinheit 18 nachgeschaltet, welche, aktiviert durch eine zentrale Steuereinheit 22, zum Auslesen eines von der Kameraeinheit 10 aufgenommenen Bildes und zum (pixelgetreuen oder komprimierten) Ablegen des CCD-Bildsignals der Kameraeinheit 10 ausgestaltet ist. Wie zudem durch den horizontalen Pfeil in Figur 2 zwischen Einheiten 18 und 20 angedeutet, ist der ersten Bildspeichereinheit 18 eine zweite Bildspeichereinheit 20 nachgeschaltet, welche - ebenfalls als Reaktion auf ein Steuer- bzw. Aktivierungssignal der zentralen Steuereinheit 22 - zum Übernehmen (Auslesen) eines in der ersten Bildspeichereinheit 18 gespeicherten Aufnahmebildes der CCD-Einheit 10 vorgesehen ist (gemäß einer alternativen Realisierungsform kann die zweite Bildspeichereinheit 20 auch unmittelbar der CCD-Einheit 10 nachgeschaltet sein und von dieser ein Bildsignal empfangen). Die Steuereinheit 22 ist dabei so konfiguriert, dass durch geeignete Ansteuerung der Einheiten 18, 20 in diesen zwei Kamerabildern gespeichert vorliegen, welche zu zwei verschiedenen Zeitpunkten aufgenommen sind; entweder können dies kontinuierlich erneuerte Bilder sein (für beide Bildspeichereinheiten), alternativ kann, etwa in der Form einer Referenzbildspeicherung, die Bildspeichereinheit 20 (oder aber die Bildspeichereinheit 18) ein unveränderliches Permanentbildsignal speichern, welches - im Fall einer Anwesenheitserfassung in einem Büro - dann beispielsweise dem Kamera-Erfassungsbild eines leeren, insbesondere ohne Anwesenheit von Personen, aufgenommenem Büros entspricht.

Die Bildsignale der Bildspeicher 18, 20 werden, wie durch Aggregate 24, 26 verdeutlicht, durch jeweilige Funktionseinheiten 24 in ihrer Helligkeit normiert, d.h. ein Bildsignal erzeugt, deren Helligkeitswerte der Einzelpixel bezogen auf einen Standard-Helligkeitswert (welcher beispielsweise mit einem Helligkeitssensor, alternativ auch mittels der Kameraeinheit 10 ermittelt sein kann) normiert sind. Zweck dieser technischen Maßnahme ist es, für das vorliegende Ausführungsbeispiel einer helligkeitsbasierten Anwesenheitserfassung dafür zu sorgen, dass nicht etwa (Umgebungs-) Helligkeitseinflüsse, wie z.B. Sonneneinstrahlung, Wolken, Dämmerung usw., welche für das gesamte aufgenommene Bild die Bildhelligkeit beeinflussen, fehlerhaft als Anwesenheits-Bildsignale interpretiert werden.

Zusätzlich wird mittels der Einheiten 26 das Bildsignal der Bildspeicher 18 bzw. 20 komprimiert; dies geschieht beispielsweise dadurch, dass - zum Zweck der vereinfachten Bildauswertung mittels der nachgeschalteten Vergleichereinheit 28 - eine typische Bildspeicherauflösung der Einheiten 18, 20 (von z.B. 480 x 640 oder 240 x 320 Pixel) dergestalt in der Bildauflösung verkleinert wird, dass etwa jeweils vier einander benachbarte Pixel zu einem neuen mittleren Pixelwert komprimiert werden. Normierung und/oder Kompression können auch durch (gemeinsame) Aggregate erfolgen, die unmittelbar der Kameraeinheit 10 nachgeschaltet sind.

Im Ergebnis liegen dann an der Vergleichseinheit (Komparator) 28 zwei komprimierte und hinsichtlich der Umgebungshelligkeit normierte Bildsignale an, welche im Hinblick auf Anwesenheit (typischerweise eine Person) in dem Erfassungsbereich der Kameraeinheit 10 verglichen werden. Typischerweise geschieht dies dadurch, dass eine zu detektierende Person als Objekt zu einem Helligkeitsunterschied zwischen mindestens einem (komprimierten) Pixel des Bildspeichers 18 (im Vergleich zum Differenzbild des Bildspeichers 20) an der entsprechenden Bildposition, wo sich die Person aufhält, führt (typischerweise erstreckt sich eine derartige Helligkeitsdifferenz über eine Mehrzahl benachbarter komprimierter Pixel). Entsprechend würde dann eine Addition der Helligkeitsdifferenzen und ein Vergleich des addierten Differenzwerts mit einem (einstellbaren oder vorbestimmten) Schwellwert eine vergleichsweise einfache, gleichwohl elegante Schlussfolgerung darüber zu lassen, ob sich etwa eine Person in dem zu überwachenden Bildbereich aufhält. Der erwähnte Schwellwert gestattet zudem die Abgrenzung bzw. Feststellung, ob lediglich kleinere, nicht zu detektierende Bildänderungen vorliegen (z.B. wie Gegenstände auf dem Schreibtisch, ein Haustier), so dass mit der beschriebenen, vergleichsweise einfachen Vorgehensweise eine durchaus zuverlässige Anwesenheitserfassung möglich ist.

In den Fig. nicht gezeigt ist ein Helligkeitssensor (der auch identisch mit dem zur Normierung der Bildhelligkeit verwendeten, s. o. sein kann), dessen der Umgebungshelligkeit entsprechendes Sensorsignal von der Steuereinheit 22 verarbeitet und zur Entscheidung darüber verwendet wird, ob die Beleuchtungseinheit überhaupt aktiviert wird, insbesondere bei heller Umgebungshelligkeit unterdrückt diese zusätzliche Funktionskomponente die Aktivierung der Beleuchtungseinheit. Weiterhin in den Fig. nicht gezeigt ist eine (z. B. mittels der Steuereinheit realisierte) Zeitsteuerung, die als Reaktion auf die Aktivierung die Beleuchtungseinheit eine vorbestimmte Zeit (Mindesteinschaltzeit) aktiviert lässt und danach (ohne dass weitere Bewegung der Anwesenheit erfasst wurde) deaktiviert.

Die vorliegende Erfindung lässt sich auch zur Bewegungserfassung verwenden, wobei hierfür insbesondere dann der Abstand der jeweils aufzunehmenden und auszuwertenden Bilder von Bedeutung ist. Insbesondere wenn, entsprechend einer anzunehmenden Bewegungsgeschwindigkeit einer zu detektierenden Person als Aufnahmeobjekt im Kamera-Erfassungsbereich, die Bilder für die Bildspeicher 18, 20 zeitnah und periodisch jeweils erzeugt werden und auch entsprechend dynamisch der Vergleich und die Auswertung auf Bildunterschiede erfolgte, ist eine Bewegungserfassung - über die vorstehend beschriebene Anwesenheitserfassung - möglich; gerade im Fall der Anwesenheitserfassung dürfte dagegen das Vorsehen eines statischen Bildes als Referenzbild (Bildspeicher 20), gegebenenfalls getriggert durch eine externe Fernsteuereinheit, ein einfacher Vorgehensweg sein.

## Patentansprüche

1. Vorrichtung zur Beleuchtungssteuerung mit einer als Reaktion auf eine durch Sensormittel (10) detektierte Bewegung und/oder Anwesenheit eines Detektionsobjekts, insbesondere einer Person, in einem Erfassungsbereich aktivierbaren Beleuchtungseinheit (14), wobei die Sensormittel Mittel (10) zur digitalen elektronischen Bilderfassung des Erfassungsbereichs aufweisen, denen elektronische Auswertemittel (16) so zugeordnet sind, dass ein Detektionssignal zur Aktivierung der Beleuchtungseinheit dann erzeugt wird, wenn ein erstes elektronisches Bildsignal eines ersten erfassten digitalen Bildes zumindest in einem Bild-Teilbereich verschieden von einem zweiten elektronischen Bildsignal eines zweiten, zeitlich beabstandet erfassten digitalen Bildes bezogen auf zumindest den Bild-Teilbereich ist, **gekennzeichnet durch** Mittel (20) zur dauerhaften Speicherung des ersten Bildsignals, wobei das erste Bildsignal einem frei von dem Detektionsobjekt im Erfassungsbereich erzeugten Signalzustand entspricht.

2. Vorrichtung nach Anspruch 1, **dadurch gekennzeichnet, dass** die Sensormittel einen Bildaufnahmesensor mit einer Mehrzahl von lichtempfindlichen Teilflächen, insbesondere CCD-Sensor, aufweisen und das erste und das zweite Bildsignal eine Helligkeitsinformation aufweist.

3. Vorrichtung nach Anspruch 1 oder 2, **dadurch gekennzeichnet, dass** die elektronischen Auswertemittel so ausgebildet sind, dass sie das Detektionssignal in Abhängigkeit von einem Bild-Helligskeitsunterschied in dem ersten bzw. zweiten elektronischen Bildsignal erzeugen.

4. Vorrichtung nach einem der Ansprüche 1 bis 3, **dadurch gekennzeichnet, dass** die elektronischen Auswertemittel Mittel (24) zur Erfassung und Normierung einer Bildhelligkeit im Erfassungsbereich aufweisen, die zum Erzeugen eines einer aktuellen Umgebungshelligkeit entsprechenden elektronischen Helligkeits-Normwerts sowie zum Korrigieren des ersten und des zweiten elektronischen Bildsignals mittels des Helligkeits-Normwerts ausgebildet sind.

5. Vorrichtung nach einem der Ansprüche 1-4, **gekennzeichnet durch** Mittel zur bevorzugt ferngesteuerten Erzeugung und Speicherung des ersten Bildsignals als Reaktion auf eine Betätigung **durch** eine Bedienperson.

6. Vorrichtung nach Anspruch 5, **dadurch gekennzeichnet, dass** die Mittel zur ferngesteuerten Erzeugung und Speicherung des ersten Bildsignals als durch die Bedienperson betätigbare drahtlose Fernsteuerung, insbesondere Funkfernsteuerung ausgebildet sind.

7. Vorrichtung nach einem der Ansprüche 1 bis 6, **dadurch gekennzeichnet, dass** den Sensormitteln eine in den Erfassungsbereich strahlende Lichtquelle zugeordnet ist, die ein zumindest teilweise außerhalb des menschlichen Wahrnehmungsvermögens liegendes, bevorzugt unsichtbares Lichtsignal abstrahlt, das die Mittel zur elektronischen Bilderfassung als Reflexion am Erfassungsobjekt bilderzeugend empfangen und aufnehmen können.

8. Vorrichtung nach Anspruch 7, **dadurch gekennzeichnet, dass** die Lichtquelle als Infrarotstrahler, bevorzugt mittels einer Infrarot-LED, ausgebildet ist.

9. Vorrichtung nach einem der Ansprüche 1 bis 8, **dadurch gekennzeichnet, dass** die elektronischen Auswertemittel Mittel zur Bildmustererkennung aufweisen, die so ausgebildet sind, dass die Erzeugung des Detektionssignals nur dann erfolgt, wenn ein Unterschied zwischen dem ersten und dem zweiten elektronischen Bildsignal einem Detektionsobjekt einer vorbestimmten Mindestgröße entspricht.

10. Vorrichtung nach einem der Ansprüche 1 bis 9, **dadurch gekennzeichnet, dass** die Mittel zur elektronischen Bilderfassung und die elektronischen Auswertemittel in einem zur Wand- und/oder Deckenmontage ausgebildeten Gehäuse vorgesehen sind.

11. Anwesenheits-Erfassungsvorrichtung, insbesondere zur Beleuchtungssteuerung, mit auf einen Erfassungsbereich gerichteten, zur Erfassung eines Detektionsobjekts sowie zum Erzeugen eines Detektionssignals als Reaktion darauf ausgebildeten und mittels eines Sensorgehäuses an einem Träger, insbesondere Wand oder Decke eines Bauwerks, befestigbaren Sensormitteln, wobei die Sensormittel Mittel zur digitalen elektronischen Bilderfassung des Erfassungsbereichs aufweisen, denen elektronische Auswertemittel so zugeordnet sind, dass das Detektionssignal dann erzeugt wird, wenn ein erstes elektronisches Bildsignal eines ersten erfassten digitalen Bildes zumindest in einen Bild-Teilbereich verschieden von einem zweiten elektronischen Bildsignal eines zweiten, seitlich beabstandet erfassten digitalen Bildes bezogen auf zumindest den Bild-Teilbereich ist, **gekennzeichnet durch** Mittel (20) zur dauerhaften Speicherung des ersten Bildsignals, wobei das erste Bildsignal einem frei von dem Detektionsobjekt im Erfassungsbereich erzeugten Signal zustand entspricht.

## Claims

1. A device for controlling illumination, having an illumination unit (14) that can be activated in a detection region in response to a movement detected by sensor means (10) and/or to the presence of a detection object, in particular, of a person, wherein the sensor means have means (10) for the digital electronic image capture of the detection region, to which electronic evaluation means (16) are assigned such that a detection signal for activating the illumination unit is generated when a first electronic image signal of a first acquired digital image differs, at least in one image sub-region, from a second electronic image signal of a second digital image acquired after a time interval, in relation to at least the image sub-region,
**characterized by**
means (20) for permanently storing the first image signal, wherein the first image signal corresponds to a signal state generated in the detection region in the absence of the detection object.

2. The device according to Claim 1,
**characterized in that**
the sensor means comprise an image recording sensor with a plurality of light-sensitive partial faces, in particular CCD-sensors, and the first and the second signal comprise brightness information.

3. The device according to Claim 1 or 2,
**characterized in that**
the electronic evaluation means are implemented such that they generate the detection signal in accordance with an image brightness difference in the first or second electronic image signal.

4. The device according to any one of Claims 1 to 3,
**characterized in that**
the electronic evaluation means have means (24) for the acquisition and normalization of an image brightness in the detection region, which are designed to generate an electronic brightness norm value corresponding to a current ambient brightness and to correct the first and the second electronic image signal using the brightness norm value.

5. The device according to any one of Claims 1-4,
**characterized by**
means for the preferably remote-controlled generation and storage of the first image signal in response to an activation by an operator.

6. The device according to Claim 5,
**characterized in that**
the means for the remote-controlled generation and storage of the first image signal are implemented as a wireless remote control which can be operated by the operator, in particular, as a radio frequency remote control.

7. The device according to any one of Claims 1 to 6, **characterized in that**
a light source emitting in the detection range is assigned to the sensor means, which emits a preferably invisible light signal lying, at least in part, outside the range of human perception, which the means for electronic image acquisition can receive and record as a reflection at the detection object, forming an image.

8. The device according to Claim 7,
**characterized in that**
the light source is implemented as an infra-red radiator, preferably by means of an infrared LED.

9. The device according to any one of Claims 1 to 8,
**characterized in that**
the electronic evaluation means have means for image pattern recognition, which are designed such that the generation of the detection signal takes place only when a difference between the first and the second electronic image signal corresponds to a detection object with a pre-specified minimum size.

10. The device according to any one of Claims 1 to 9,
**characterized in that**
the means for electronic image acquisition and the electronic evaluation means are provided in a housing designed for wall mounting and/or ceiling mounting.

11. A presence detection device, in particular for controlling illumination, having sensor means which are directed towards a detection region and designed for detecting a detection object and for generating a detection signal in response thereto, and which can be fastened by means of a sensor housing to a support, in particular a wall or ceiling of a building, wherein the sensor means have means for the digital electronic image acquisition of the detection region, to which electronic evaluation means are assigned such that the detection signal is generated when a first electronic image signal of a first acquired digital image differs, at least in one image sub-region, from a second electronic image signal of a second digital image acquired after a time interval, in relation to at least the image sub-region,
**characterized by**
means (20) for the permanent storage of the first image signal, wherein the first image signal corresponds to a signal state generated in the detection region in the absence of the detection object.

## Revendications

1. Dispositif de commande d'éclairage comportant une unité d'éclairage (14) activable en réponse à un mouvement et/ou à la présence détectée par des moyens détecteurs (10) d'un objet de détection, notamment d'une personne dans une zone de détection, dans lequel les moyens détecteurs comprennent des moyens (10) destinés à acquérir des images électroniques numériques de la zone de détection, auxquelles sont associés des moyens électroniques d'évaluation (16) de manière à ce qu'un signal de détection ne soit généré pour l'activation de l'unité d'éclairage que lorsqu'un premier signal d'image électronique d'une première image numérique détectée se trouve dans une zone d'image partielle différente d'un second signal d'image électronique d'une seconde image numérique détectée de manière décalée dans le temps par rapport à au moins la zone d'image partielle, **caractérisé par** des moyens (20) destinés à stocker de manière permanente le premier signal d'image, dans lequel le premier signal d'image correspond à un état du signal généré en l'absence de l'objet de détection dans la zone de détection.

2. Dispositif selon la revendication 1, **caractérisé en ce que** les moyens détecteurs comprennent un capteur d'acquisition d'image comportant une pluralité de facettes photosensibles, notamment un capteur à CCD, et **en ce que** les premier et second signaux d'image comprennent une information de luminosité.

3. Dispositif selon la revendication 1 ou 2, **caractérisé en ce que** les moyens électroniques d'évaluation sont conçus de manière à générer le signal de détection en fonction d'une différence de luminosité de l'image dans les premier ou second signaux d'image électroniques.

4. Dispositif selon l'une quelconque des revendications 1 à 3, **caractérisé en ce que** les moyens électroniques d'évaluation comprennent des moyens (24), destinés à détecter et à normaliser une luminosité d'image dans la zone de détection, qui sont conçus pour générer une valeur de normalisation électronique de la luminosité correspondant à une luminosité ambiante actuelle et pour corriger les premier et second signaux d'images électroniques au moyen de la valeur de normalisation de luminosité.

5. Dispositif selon l'une quelconque des revendications 1 à 4, **caractérisé par** des moyens destinés à générer et à stocker, de préférence de manière télécommandée, le premier signal d'image en réponse à un actionnement effectué par un utilisateur.

6. Dispositif selon la revendication 5, **caractérisé en ce que** les moyens destinés à générer et stocker de manière télécommandée le premier signal d'image sont conçus sous la forme d'une télécommande sans fil pouvant être actionnée par l'utilisateur, notamment d'une télécommande radio.

7. Dispositif selon l'une quelconque des revendications 1 à 6, **caractérisé en ce qu'**une source de lumière rayonnant dans la zone de détection est associée aux moyens détecteurs, laquelle source de lumière rayonne un signal lumineux se situant au moins en partie en dehors du domaine de perception humain, de préférence invisible, que les moyens électroniques de détection d'image peuvent recevoir et acquérir sous forme d'une réflexion sur l'objet de détection en générant une image.

8. Dispositif selon la revendication 7, **caractérisé en ce que** la source de lumière est réalisée sous la forme d'un émetteur de rayonnement infrarouge, de préférence au moyen d'une LED infrarouge.

9. Dispositif selon l'une quelconque des revendications 1 à 8, **caractérisé en ce que** les moyens électroniques d'évaluation comprennent des moyens de reconnaissance de formes d'images qui sont conçues de manière à ce que la génération du signal de détection ne s'effectue que lorsqu'une différence entre les premier et second signaux d'images électroniques correspond à un objet de détection ayant une taille minimale prédéterminée.

10. Dispositif selon l'une quelconque des revendications 1 à 9, **caractérisé en ce que** les moyens électroniques de détection d'images et les moyens électroniques d'évaluation sont disposés dans un boîtier conçu pour être monté au mur et/ou au plafond.

11. Dispositif de détection de présence, notamment destiné à une unité de commande d'éclairage, comportant des moyens détecteurs dirigés vers une zone de détection, conçus pour détecter un objet de détection et pour générer un signal de détection en réponse à celui-ci, et pouvant être fixés au moyen d'un boîtier de détecteur à un support, notamment à un mur ou un plafond d'un bâtiment, dans lequel les moyens détecteurs comprennent des moyens électroniques de détection d'images numériques de la zone de détection, auxquels sont associés des moyens électroniques d'évaluation de manière à ce que le signal de détection ne soit généré que lorsqu'un premier signal d'image électronique d'une première image numérique détectée se trouve au moins dans une zone d'image partielle différente d'un second signal d'image électronique d'une seconde image numérique détectée de manière décalée dans le temps par rapport à au moins la zone d'image partielle, **caractérisé par** des moyens (20) destinés à stocker de manière permanente le premier signal d'image, dans lequel le premier signal d'image correspond à un état du signal généré en l'absence de l'objet de détection dans la zone de détection.
